# EUROPÄISCHE PATENTANMELDUNG

(11) **EP 3 624 413 A1**
(43) Veröffentlichungstag der Anmeldung: **18.03.2020**
(21) Anmeldenummer: 18194247.5
(22) Anmeldetag: 13.09.2018
(51) Int. Cl.: H04L 29/06, H04L 12/24, H04L 9/32, G05B 19/418, H04L 29/08

(54) **AUTOMATISIERTES ZERTIFIKATSMANAGEMENT FÜR AUTOMATISIERUNGSANLAGEN**

(71) Anmelder: Siemens Aktiengesellschaft, 80333 München (DE)
(72) Erfinder: Lutz, Benjamin, 76327 Pfinztal (DE); Palmin, Anna, 76187 Karlsruhe (DE)

(57) **Zusammenfassung**

Vorgeschlagen wird eine Servicefunktion (6, 9) eines Leitsystems (1) einer technischen Anlage, die dazu ausgebildet ist, zwischen wenigstens einer Registrierungsstelle (11, 12) der technischen Anlage und wenigstens einer Anlagenkomponente bei Zertifikatsanträgen der wenigstens einen Anlagenkomponente zu vermitteln,
wobei die wenigstens eine Anlagenkomponente bereits Teil der technischen Anlage ist oder für eine Integration in die technische Anlage vorgesehen ist,
und wobei eine Vermittlung der Servicefunktion wenigstens darin besteht, eine für die wenigstens eine Anlagenkomponente zuständige Registrierungsstelle (11, 12) der technischen Anlage zu identifizieren und einen Zertifikatsantrag der wenigstens einen Anlagenkomponente an die entsprechende Registrierungsstelle (11, 12) weiterzuleiten, wobei die Registrierungsstelle (11, 12) dazu ausgebildet und vorgesehen ist, den Zertifikatsantrag an eine Zertifizierungsstelle (14) der technischen Anlage weiterzuleiten.

## Beschreibung

Die Erfindung betrifft eine Software-Datenbank für eine Public-Key Infrastruktur einer technischen Anlage, insbesondere Fertigungs- oder Prozessanlage, die wenigstens eine eindeutige Kennzeichnung von in die technische Anlage einbezogenen Anlagenkomponenten umfasst, nach Anspruch 1. Außerdem betrifft die Erfindung eine Service-funktion eines Leitsystems einer technischen Anlage nach Anspruch 2. Zudem betrifft die Erfindung ein Leitsystem einer technischen Anlage, insbesondere Fertigungs- oder Prozessanlage, nach Anspruch 5 und eine technische Anlage nach Anspruch 6. Außerdem betrifft die Erfindung ein Verfahren zur Beantragung eines Zertifikats bei einer Registrierungsstelle einer technischen Anlage durch eine Komponente der technischen Anlage nach Anspruch 7 und ein Verfahren zur Ausstellung eines Zertifikats durch eine Zertifizierungsstelle einer technischen Anlage nach Anspruch 11.

Im Rahmen einer Public Key Infrastruktur einer technischen Anlage werden sogenannte Registrierungsdienste (englisch: registration authorities) verwendet, um Zertifikatsanträge (sogenannte certificate signing requests oder kurz: CSR) von Geräten oder anderen Komponenten der technischen Anlage entgegenzunehmen und sie zur Validierung an eine Zertifizierungsstelle weiterzuleiten.

Bei den Zertifikatsanträgen kann es sich um Anträge zwecks der initialen Beantragung (Bootstrapping) oder der Erneuerung (Update) von Zertifikaten handeln. Beim Bootstrapping wird der Zertifikatsantrag in der Regel mit dem Herstellergerätezertifikat (englisch: manufacturer device certificate, kurz: MDC) signiert, während beim Update das zuletzt ausgestellte operative Zertifikat (OC) zum Signieren verwendet wird. Alternativ oder zusätzlich zum Gerätezertifikat, das während der Fertigung des Geräts von einer Zertifizierungsstelle des Herstellers des Geräts ausgestellt wird, kann das sogenannte Kundengerätezertifikat (englisch: customer device certificate, kurz: CDC) verwendet werden. Dabei handelt es sich um ein Zertifikat, das das entsprechende Gerät nach einer Prüfung in der technischen Anlage erhalten hat. Damit die Registrierungsstelle die Zertifikatsanträge bearbeiten kann, müssen ihr im Falle des Bootstrappings wenigstens ein Gerätezertifikat (und/oder ein Kundenzertifikat) und im Falle des Updates wenigstens ein operatives Zertifikat vorliegen.

Die Aufgaben einer Registrierungsstelle können - je nach Anlagengröße und weiteren Randbedingungen - sowohl von einer dedizierten Registrierungsstelle als auch von bestehenden Software-Werkzeugen, wie z.B. Engineering-oder Runtime-Tools, übernommen werden. Während für eine große technische Anlage eine dedizierte Registrierungsstelle, die sowohl während des Engineerings als auch anschließend zur Laufzeit der Anlage verfügbar ist, von Vorteil sein kann, bietet sich für kleinere Anlagen die Integration der Funktionalitäten der Registrierungsstelle in bestehende Software-Werkzeuge bzw. Anlagenkomponenten an.

Anlagenkomponenten können die operativen Zertifikate, die sie für die Nutzung verschiedener sicherer Protokolle wie z.B. TLS oder OPC UA benötigen, selbst beantragen. Dabei richtet eine Anlagenkomponente in der Rolle eines Clients bzw. eines Antragstellers ihren Zertifikatsantrag an eine bestimmte Registrierungsstelle, welche den Antrag validiert und an eine Zertifizierungsstelle, die sich beispielsweise in der Anlage ("Onsite-CA") oder einem Trust Center ("Offsite-CA" oder "CA as a Service") weiterleitet. Dabei ist es möglich, die Adresse der Registrierungsstelle (beispielsweise in Form eines Uniform Resource Locators, kurz: URL) in einer Konfigurationsdatei der Anlagenkomponente selbst zu hinterlegen.

In den meisten Anlagen steht ein Engineering-Werkzeug, wie beispielsweise das sogenannte "TIA-Portal" des Unternehmens Siemens, das zum initialen Ausrollen von Zertifikaten beim Engineering verwendet wurde, zu einer Laufzeit der technischen Anlage nicht mehr zur Verfügung. Da die Zertifikate, insbesondere die operativen Zertifikate, nur eine begrenzte Gültigkeitsdauer aufweisen, müssen sie zur Laufzeit jedoch erneuert werden können.

Im Prinzip könnte die Zertifikatserneuerung von einem anderen adäquaten Laufzeit-Werkzeug (einem sogenannten "Runtime-Tool") übernommen werden. Dies ist jedoch mit den folgenden Problemen verbunden:
Wie oben bereits erläutert, wird ein Zertifizierungsantrag, der auf eine Zertifikatserneuerung gerichtet ist, in der Regel durch das zu erneuernde Zertifikat selbst signiert. Der Registrierungsstelle, die den Erneuerungsantrag validieren soll, muss somit das zu erneuernde Zertifikat vorliegen. Wurde das zu erneuernde Zertifikat über das Engineering-Werkzeug beantragt, liegt es jedoch dem Laufzeit-Werkzeug in der Regel nicht vor.

Die ein Zertifikat beantragende Anlagenkomponente weist, wie zuvor erläutert, Informationen darüber auf, bei welcher "richtigen" Registrierungsstelle sie ihre Zertifikate beantragen soll. Oftmals wird die Funktion einer Registrierungsstelle in der Engineering-Phase der technischen Anlage von einer Komponente des eingesetzten Engineering-Werkzeugs übernommen. Diese Komponente steht aber zur Laufzeit der technischen Anlage in der Regel nicht mehr zur Verfügung bzw. kann nicht mehr zur Verfügung stehen. Die in der Anlagenkomponente hinterlegten Informationen bezüglich der Registrierungsstelle sind daher zur Laufzeit der technischen Anlage daher oftmals nicht mehr nutzbar.

Der Erfindung liegt die Aufgabe zugrunde, eine Software-Datenbank, eine Servicefunktion eines Leitsystems und ein dazugehöriges Leitsystem anzugeben, die eine Zertifikatsbeantragung von Komponenten einer technischen Anlage sowohl beim Initiieren der Komponenten in einer Engineering-Phase als auch bei einem Erneuerungsvorgang der Komponenten zur Laufzeit der Anlage vereinfachen.

Diese Aufgabe wird gelöst durch eine Software-Datenbank für eine Public-Key Infrastruktur einer technischen Anlage, insbesondere Fertigungs- oder Prozessanlage, die wenigstens eine eindeutige Kennzeichnung von in die technische Anlage einbezogenen Anlagenkomponenten umfasst, nach Anspruch 1. Außerdem wird die Erfindung gelöst durch eine Servicefunktion eines Leitsystems einer technischen Anlage nach Anspruch 2. Zudem wird die Aufgabe gelöst durch ein Leitsystem einer technischen Anlage, insbesondere Fertigungs- oder Prozessanlage, nach Anspruch 5 und eine technische Anlage nach Anspruch 6. Außerdem wird die Aufgabe gelöst durch ein Verfahren zur Beantragung eines Zertifikats bei einer Registrierungsstelle einer technischen Anlage durch eine Komponente der technischen Anlage nach Anspruch 7 und ein Verfahren zur Ausstellung eines Zertifikats durch eine Zertifizierungsstelle einer technischen Anlage nach Anspruch 11. Vorteilhafte Weiterbildungen ergeben sich aus den abhängigen Ansprüchen.

Eine Software-Datenbank für eine Public-Key Infrastruktur einer technischen Anlage, insbesondere Fertigungs- oder Prozessanlage, die wenigstens eine eindeutige Kennzeichnung von in die technische Anlage einbezogenen Anlagenkomponenten umfasst, ist erfindungsgemäß dadurch gekennzeichnet, dass die Software-Datenbank die folgenden Komponenten für wenigstens eine Anlagenkomponente, bezüglich derer eine eindeutige Kennzeichnung in der Software-Datenbank hinterlegt ist, aufweist:
a) ein von einem Hersteller der Anlagenkomponente und/oder einem Betreiber der technischen Anlage ausgestelltes Gerätezertifikat;
b) und wenigstens ein operatives Zertifikat, das für die Anlagenkomponente in der technischen Anlage ausgestellt worden ist.

Bei der technischen Anlage kann es sich um eine Anlage aus der Prozessindustrie wie beispielsweise eine chemische, pharmazeutische, petrochemische oder eine Anlage aus der Nahrungs- und Genussmittelindustrie handeln. Hiermit umfasst sind auch jegliche Anlagen aus der Produktionsindustrie, Werke, in denen z.B. Autos oder Güter aller Art produziert werden. Technische Anlagen, die zur Durchführung des erfindungsgemäßen Verfahrens geeignet sind, können auch aus dem Bereich der Energieerzeugung kommen. Windräder, Solaranlagen oder Kraftwerke zur Energieerzeugung sind ebenso von dem Begriff der technischen Anlage umfasst.

Diese Anlagen verfügen jeweils über ein Leitsystem oder zumindest ein computerunterstütztes Modul zur Steuerung und Regelung des ablaufenden Prozesses oder der Produktion. Teil des Leitsystems oder Steuerungsmoduls oder einer technischen Anlage ist zumindest eine Software-Datenbank, in der Daten hinterlegbar sind.

Mit dem Begriff "Public-Key Infrastruktur" (kurz: PKI) wird eine Sicherheitsinfrastruktur für eine technische Anlage verbunden, die Services für einen sicheren Austausch von Daten zwischen Kommunikationspartnern der technischen Anlage bereitstellt. Mit Hilfe der Public-Key Infrastruktur lassen sich Zertifikate ausstellen, verteilen und prüfen.

Unter einem Zertifikat wird ein digitaler Datensatz verstanden, der bestimmte Eigenschaften (in diesem Fall von Maschinen, Geräten, Applikationen und dergleichen) bestätigt. Eine Authentizität und Integrität des Zertifikats kann mittels kryptografischer Verfahren verifiziert werden.

Bei der eindeutigen Kennzeichnung kann es sich beispielsweise um eine Seriennummer der Anlagenkomponente handeln. Eine solche Anlagenkomponente kann beispielsweise ein Feldgerät, eine Steuerungsvorrichtung, eine Applikation oder dergleichen sein.

Die erfindungsgemäße Software-Datenbank enthält wenigstens ein von einem Hersteller der Anlagenkomponente und/oder einem Betreiber der technischen Anlage ausgestelltes Zertifikat. Im Falle eines Gerätes handelt es sich bei dem von dem Hersteller des Gerätes ausgestellten Zertifikats um ein sogenanntes Gerätezertifikat. Zudem enthält die Software-Datenbank wenigstens ein operatives Zertifikat. Ein solches operatives Zertifikat ist basierend auf dem Antrag einer Anlagenkomponente ausgestellt worden.

Durch die zentrale Ablage der Zertifikate in der Software-Datenbank können neben der Vereinfachung des Zertifikatsmanagements eine höhere Transparenz sowie eine bessere Auditierbarkeit und Rückverfolgbarkeit der technischen Anlage erreicht werden.

Die zuvor aufgeführte Aufgabe wird zudem durch eine erfindungsgemäße Servicefunktion eines Leitsystems einer technischen Anlage gelöst. Diese ist dazu ausgebildet, zwischen wenigstens einer Registrierungsstelle der technischen Anlage und wenigstens einer Anlagenkomponente bei Zertifikatsanträgen der wenigstens einen Anlagenkomponente zu vermitteln, wobei die wenigstens eine Anlagenkomponente bereits Teil der technischen Anlage ist oder für eine Integration in die technische Anlage vorgesehen ist, und wobei eine Vermittlung der Servicefunktion wenigstens darin besteht, eine für die wenigstens eine Anlagenkomponente zuständige Registrierungsstelle der technischen Anlage zu identifizieren und einen Zertifikatsantrag der wenigstens einen Anlagenkomponente an die entsprechende Registrierungsstelle weiterzuleiten, wobei die Registrierungsstelle dazu ausgebildet und vorgesehen ist, den Zertifikatsantrag an eine Zertifizierungsstelle der technischen Anlage weiterzuleiten.

Unter einem Leitsystem wird im vorliegenden Kontext ein computergestütztes, technisches System verstanden, das Funktionalitäten zum Darstellen, Bedienen und Leiten einer technischen Fertigungs- oder Produktionsanlage umfasst. Das Leitsystem umfasst im vorliegenden Fall Sensoren zur Ermittlung von Messwerten sowie verschiedene Aktoren. Zudem umfasst das Leitsystem sogenannte prozess- oder fertigungsnahe Komponenten, die zur Ansteuerung der Aktoren bzw. Sensoren dienen. Darüber hinaus weist das Leitsystem u.a. Mittel zur Visualisierung der technischen Anlage und zu einem Engineering auf. Unter dem Begriff Leitsystem sind zusätzlich auch weitere Recheneinheiten für komplexere Regelungen und Systeme zur Datenspeicherung und -verarbeitung zu fassen.

Unter einer Registrierungsstelle der technischen Anlage wird eine funktionelle Instanz verstanden, die Registrierungsanfragen wie Zertifikatsanträge von Komponenten der technischen Anlage entgegennimmt, diese prüft und im Erfolgsfall insbesondere an eine Zertifizierungsstelle der technischen Anlage weiterleitet. Im vorliegenden Fall ist die Registrierungsstelle vor allem dafür vorgesehen, Zertifikatsanträge von Anlagenkomponenten der technischen Anlage zu behandeln.

Die erfindungsgemäße Servicefunktion hat eine Vermittlerfunktion inne. Sie weiß, welche Registrierungsstelle für einen bestimmten Zertifikatsantrag einer bestimmten Anlagenkomponente zuständig ist bzw. auszuwählen ist. Regelmäßig weist eine technische Anlage mehr als eine Registrierungsstelle auf, so dass es notwendig ist, die richtige Registrierungsstelle für eine bestimmte Anlagenkomponente zu einer bestimmten Zeit zu kennen. "Richtig" bedeutet hierbei, dass eine bestimmte Registrierungsstelle beispielsweise aktuelle eine nur geringe Auslastung aufweist und eingehende Anträge daher schnell bearbeiten kann. Zudem können Registrierungsstellen zeitweise nicht erreichbar sein, weil eine Verbindung aufgrund eines Defekts unterbrochen ist.

Die Servicefunktion verfügt erfindungsgemäß über die notwendigen Informationen, um zwischen den Anlagenkomponenten und den Registrierungsstellen zu vermitteln. Hierzu kann es vorgesehen sein, dass sich die Registrierungsstellen der technischen Anlage aktiv bei der Servicefunktion melden und ihren Status übermitteln. Es ist jedoch auch möglich, dass die Servicefunktion von sich aus eine Abfrage startet, welche Registrierungsstellen zu bestimmten Zeitpunkten verfügbar sind.

Ein aus der Erfindung erwachsender Vorteil besteht darin, dass Konfigurationsdaten der einzelnen Anlagenkomponenten hinsichtlich der auszuwählenden Registrierungsstelle nicht regelmäßig aktualisiert werden müssen. Zudem wird der Anlagenkomponente bzw. einem Anwender, der die Anlagenkomponente in die technische Anlage integrieren soll, die Aufgabe abgenommen, die korrekte/richtige Registrierungsstelle zu identifizieren.

Vorteilhafterweise ist die Servicefunktion auf einem Operator Station Server und/oder einem Operator Station Einzelrechner implementiert. Unter einem "Operator Station Server" wird vorliegend ein Server verstanden, der zentral Daten eines Bedien- und Beobachtungssystems sowie in der Regel Alarm- und Messwertarchive eines Leitsystems einer technischen Anlage erfasst und Benutzern zur Verfügung stellt. Die Servicefunktion kann dabei auf mehreren Rechnern/Servern implementiert sein, um eine Redundanz bzw. höhere Verfügbarkeit zu erreichen.

Der Operator Station Server stellt in der Regel eine Kommunikationsverbindung zu Automatisierungssystemen der technischen Anlage her und gibt Daten der technischen Anlage an sogenannte Clients weiter, die zur Bedienung und Beobachtung eines Betriebs der einzelnen Funktionselemente der technischen Anlage dienen. Der Operator Station Server kann über Client-Funktionen verfügen, um auf die Daten (Archive, Meldungen, Tags, Variablen) anderer Operator Station Server zuzugreifen. Dadurch sind Bilder eines Betriebs der technischen Anlage auf dem Operator Station Server mit Variablen anderer Operator Station Server (Server-Server-Kommunikation) kombinierbar. Bei dem Operator Station Server kann es sich, ohne sich darauf zu beschränken, um einen SIMATIC PCS 7 Industrial Workstation Server der Firma SIEMENS handeln. Bei einer vorteilhaften Weiterbildung der erfindungsgemäßen Servicefunktion ist diese dazu ausgebildet, eine wechselseitige Koordinierung mehrerer Registrierungsdienste der technischen Anlage vorzunehmen, derart, dass eine eindeutige Zuordnung zwischen einer Anlagenkomponente der technischen Anlage und einem für Zertifikatsanträge dieser Anlagenkomponente zuständigen Registrierungsdienst von der Servicefunktion vornehmbar ist. Eine solche Koordinierung kann beispielsweise darin bestehen, dass sich keine weitere Registrierungsstelle bei der Servicefunktion registriert, solange bereits eine Registrierungsstelle als verfügbar gekennzeichnet ist.

Die Aufgabe wird zudem gelöst durch ein Leitsystem einer technischen Anlage, insbesondere Fertigungs- oder Prozessanlage, in dem wenigstens eine Software-Datenbank und eine Servicefunktion, die wie zuvor erläutert ausgebildet sind, implementiert sind. Durch die vorteilhafte Kombination der Software-Datenbank und der Servicefunktion wird die Vermittlungstätigkeit der Servicefunktion deutlich vereinfacht. Sie muss insbesondere nicht beachten, ob der gewählten Registrierungsstelle das Zertifikat der Anlagenkomponente, die einen Antrag stellt, überhaupt bekannt ist. Durch die Ablage der ausgestellten Zertifikate in der Software-Datenbank sind diese jederzeit von jeder beliebigen Registrierungsstelle abrufbar. Die Ablage der Zertifikate in der Software-Datenbank kann dabei durch die Registrierungsstellen oder die Servicefunktion selbst erfolgen. Es ist natürlich auch möglich, weitere oder andere Funktionen zwischen die Kette "Zertifizierungsstelle-Anlagen-komponente" zu schalten.

Die Aufgabe wird auch durch eine technische Anlage, insbesondere Fertigungs- oder Prozessanlage, gelöst, in der wenigstens ein Leitsystem wie zuvor erläutert implementiert ist.

Ein erfindungsgemäßes Verfahren zur Beantragung eines Zertifikats bei einer Registrierungsstelle einer technischen Anlage durch eine Komponente der technischen Anlage umfasst die folgenden Schritte:
a) Übertragen eines Zertifikatsantrags einer Anlagenkomponente an eine für die Anlagenkomponente zuständige Registrierungsstelle der technischen Anlage mittels einer Servicefunktion, die wie zuvor erläutert ausgebildet ist;
b) Überprüfung durch die Registrierungsstelle, ob ein dem Zertifizierungsantrag beigefügtes, von einem Hersteller der Anlagenkomponente und/oder ein von einem Betreiber der technischen Anlage ausgestelltes Zertifikat und/oder ein operatives Zertifikat, das für die Anlagenkomponente in der technischen Anlage ausgestellt worden ist, in einer Software-Datenbank der technischen Anlage, die wie zuvor erläutert ausgebildet ist, hinterlegt ist;
c) Überprüfung durch die Registrierungsstelle, ob eine Signatur des Zertifizierungsantrags korrekt ist;
d) Überprüfung durch die Registrierungsstelle, ob ein öffentlicher Schlüssel des Zertifizierungsantrags mit einem in dem von einem Hersteller der Anlagenkomponente und/oder einem Betreiber der technischen Anlage ausgestellten Zertifikat und/oder einem operativen Zertifikat, das für die Anlagenkomponente in der technischen Anlage ausgestellt worden ist, enthaltenen öffentlichen Schlüssel übereinstimmt.

Bei der Prüfung gemäß Verfahrensschritt c handelt es sich um eine sogenannte "Proof of Possession". Dabei wird geprüft, ob die Signatur des Zertifikatsantrags (der im Englischen auch als "Certificate Signing Request", oder kurz: CSR, bezeichnet wird) von der den Antrag stellen Anlagenkomponente (unter Verwendung eines nur ihr vorliegenden Private Keys) generiert worden ist. Wenn sich die Signatur als ungültig erweist, wird die Validierung der Anlagenkomponente abgebrochen.

Die Überprüfung der öffentlichen Schlüssel gemäß Verfahrensschritt d wird auch als "Proof of Origin" bezeichnet.

Die Registrierungsstelle kann im Rahmen des Prüfungsverfahrens zusätzlich prüfen, ob die Anlagenkomponente, die den Zertifizierungsantrag stellt, einem bestimmten Unternehmen zugeordnet werden kann.

Alternativ oder zusätzlich kann die Registrierungsstelle im Rahmen des Prüfungsverfahrens prüfen, welchen Typ die Anlagekomponente aufweist und/oder ob ein Verwendungszweck des Zertifikatsantrags korrekt ist.

Im Erfolgsfall, also bei einer erfolgreichen Validierung der den Zertifizierungsantrag stellenden Anlagenkomponente, kann ein entsprechendes Zertifikat von der Zertifizierungsstelle ausgestellt und sowohl an die entsprechende Anlagenkomponente als auch an die zuvor erläuterte Software-Datenbank der technischen Anlage übertragen werden. Diese Übertragung kann, wie zuvor ausgeführt, beispielsweise von den Registrierungsstellen oder der Service-Funktion vorgenommen werden.

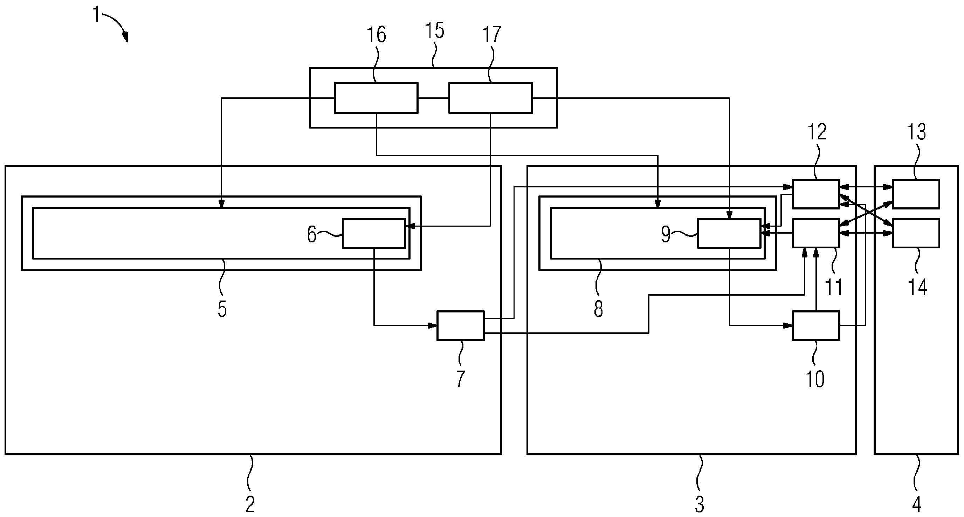

Die oben beschriebenen Eigenschaften, Merkmale und Vorteile dieser Erfindung sowie die Art und Weise, wie diese erreicht werden, werden klarer und deutlicher verständlich im Zusammenhang mit der folgenden Beschreibung des Ausführungsbeispiels, das im Zusammenhang mit der Zeichnung näher erläutert wird.

In der Zeichnung ist schematisch ein Teil eines erfindungsgemäßen Leitsystem 1 einer technischen Anlage dargestellt. Das Leitsystem 1 umfasst einen Einzelrechner 2, einen Operator Station Server 3 und einen weiteren Server 4.

Auf dem Einzelrechner 2 ist ein Webserver 5 implementiert, in welchem wiederum eine Service-Funktion 6 integriert ist. Zudem ist auf dem Einzelrechner ein Zertifizierungsservice 7 implementiert.

Auf dem Operator Station Server 3 ist ein Webserver 8 implementiert, in welchem wiederum eine Service-Funktion 9 integriert ist. Zudem sind auf dem Operator Station Server 3 ein Zertifizierungsservice 10 und eine erste Registrierungsstelle 11 sowie eine zweite Registrierungsstelle 12 implementiert.

Auf dem weiteren Server 4 sind eine Software-Datenbank 13 und eine Zertifizierungsstelle 14 implementiert.

Das Leitsystem 1 weist zudem eine Terminalstation 15 auf, auf welcher eine Anzeigefunktion 16 und ein Client einer Service-Funktion 17 implementiert sind.

Mittels der Anzeigefunktion 16 kann ein Anwender sich eine grafische Darstellung der durch die Webserver 5, 8 bereitgestellten Dienste anzeigen lassen. Die Servicefunktion 17 greift als Clientfunktion auf die beiden erfindungsgemäß als Vermittler ausgebildeten anderen Servicefunktionen 6, 9 zu. Diese sind in einem Cluster zusammengefügt, um eine Verfügbarkeit zu erhöhen. Korrekt ausgedrückt, greift der Client der Service-Funktion 17 daher auf das Cluster zu.

Durch den Cluster bereitgestellt, kann über jede der beiden Servicefunktionen 6,9 die aktuelle Registrierungsstelle 11, 12 abgefragt werden. Ein von der Anlagenkomponente gestellter Zertifikatsantrag wird automatisch an die richtige Registrierungsstelle 11, 12 weitergeleitet. Zwischen den Servicefunktionen 6, 9 ist jeweils ein Zertifizierungsservice 7, 10 geschaltet, der die aktuell verfügbaren Registrierungsstellen 11, 12 ermittelt und anschließend bei der entsprechenden Registrierungsstelle 11, 12 einen Zertifikatsantrag stellt.

Die ausgewählte Registrierungsstelle 11, 12 leitet den Zertifikatsantrag im Erfolgsfall, d.h. bei erfolgreicher Validierung der Anlagenkomponente, an die Zertifizierungsstelle 14 der technischen Anlage weiter. Die Zertifizierungsstelle 14 wird auch als eine sogenannte "Issuing CA (Certification Authority)" bezeichnet. Eine derartige Issuing CA ist in der Regel stets online und stellt, basierend auf eingehenden Zertifikatsanträgen, Zertifikate für diverse Antragsteller aus, die sie mit ihrem eigenen Issuing CA Zertifikat signiert. Die Vertrauenswürdigkeit der Issuing CA wird dadurch sichergestellt, dass ihr eigenes Issuing CA Zertifikat durch das Zertifikat einer vertrauenswürdigen Wurzelzertifizierungsstelle (auch als "Root CA" bezeichnet), die sich in einer abgesicherten Umgebung befindet, signiert ist. Hierbei ist zu beachten, dass die Root CA die meiste Zeit offline ist und nur dann - unter der Einhaltung strengster Sicherheitsvorkehrungen - aktiviert bzw. eingeschaltet wird, wenn sie ein Zertifikat für eine zugehörige Issuing CA ausstellen soll. Die Root CA kann sich außerhalb der technischen Anlage befinden.

Das von der Zertifizierungsstelle 14 ausgestellte Zertifikat wird anschließend sowohl an die Anlagenkomponente als auch an die Software-Datenbank 13 übertragen, wo es für zukünftige, weitere Zertifikatsfragen innerhalb des gesamten Leitsystems 1 zur Verfügung steht.

Obwohl die Erfindung im Detail durch das bevorzugte Ausführungsbeispiel näher illustriert und beschrieben wurde, so ist die Erfindung nicht durch die offenbarten Beispiele eingeschränkt und andere Variationen können vom Fachmann hieraus abgeleitet werden, ohne den Schutzumfang der Erfindung zu verlassen.

## Patentansprüche

1. Software-Datenbank (13) für eine Public-Key Infrastruktur einer technischen Anlage, insbesondere Fertigungs- oder Prozessanlage, die wenigstens eine eindeutige Kennzeichnung von in die technische Anlage einbezogenen Anlagenkomponenten umfasst,
**dadurch gekennzeichnet, dass**
die Software-Datenbank (13) die folgende Informationen für wenigstens eine Anlagenkomponente, bezüglich derer eine eindeutige Kennzeichnung in der Software-Datenbank (13) hinterlegt ist, aufweist:
a) ein von einem Hersteller der Anlagenkomponente und/oder einem Betreiber der technischen Anlage ausgestelltes Gerätezertifikat;
b) und wenigstens ein operatives Zertifikat, das für die Anlagenkomponente in der technischen Anlage ausgestellt worden ist.

2. Servicefunktion (6, 9) eines Leitsystems (1) einer technischen Anlage, die dazu ausgebildet ist, zwischen wenigstens einer Registrierungsstelle (11, 12) der technischen Anlage und wenigstens einer Anlagenkomponente bei Zertifikatsanträgen der wenigstens einen Anlagenkomponente zu vermitteln, wobei die wenigstens eine Anlagenkomponente bereits Teil der technischen Anlage ist oder für eine Integration in die technische Anlage vorgesehen ist,
und wobei eine Vermittlung der Servicefunktion wenigstens darin besteht, eine für die wenigstens eine Anlagenkomponente zuständige Registrierungsstelle (11, 12) der technischen Anlage zu identifizieren und einen Zertifikatsantrag der wenigstens einen Anlagenkomponente an die entsprechende Registrierungsstelle (11, 12) weiterzuleiten, wobei die Registrierungsstelle (11, 12) dazu ausgebildet und vorgesehen ist, den Zertifikatsantrag an eine Zertifizierungsstelle (14) der technischen Anlage weiterzuleiten.

3. Servicefunktion (6, 9) nach Anspruch 2, die auf wenigstens einem Operation Station Server (3) und/oder einem Operator Station Einzelrechner (2) implementiert ist.

4. Servicefunktion (6, 9) nach Anspruch 2 oder 3, die dazu ausgebildet ist, eine wechselseitige Koordinierung mehrerer Registrierungsdienste (11, 12) der technischen Anlage vorzunehmen, derart, dass eine eindeutige Zuordnung zwischen einer Anlagenkomponente der technischen Anlage und einem für Zertifikatsanträge dieser Anlagenkomponente zuständigen Registrierungsdienst (11, 12) von der Servicefunktion (6, 9) vornehmbar ist.

5. Leitsystem (1) einer technischen Anlage, insbesondere Fertigungs- oder Prozessanlage, in dem wenigstens eine Software-Datenbank (13) gemäß Anspruch 1 und eine Servicefunktion (6, 9) gemäß einem der Ansprüche 2 bis 4 implementiert ist.

6. Technische Anlage, insbesondere Fertigungs- oder Prozessanlage, in der wenigstens ein Leitsystem (1) gemäß Anspruch 5 implementiert ist.

7. Verfahren zur Beantragung eines Zertifikats bei einer Registrierungsstelle (11, 12) einer technischen Anlage durch eine Komponente der technischen Anlage, umfassend:
a) Übertragen eines Zertifikatsantrags einer Anlagenkomponente an eine für die Anlagenkomponente zuständige Registrierungsstelle (11, 12) der technischen Anlage mittels einer Servicefunktion (6, 9) gemäß einem der Ansprüche 2 bis 4;
b) Überprüfung durch die Registrierungsstelle (11, 12), ob ein dem Zertifizierungsantrag beigefügtes, von einem Hersteller der Anlagenkomponente und/oder ein von einem Betreiber der technischen Anlage ausgestelltes Zertifikat, und/oder ein operatives Zertifikat, das für die Anlagenkomponente in der technischen Anlage ausgestellt worden ist, in einer gemäß Anspruch 1 ausgebildeten Software-Datenbank der technischen Anlage hinterlegt ist;
c) Überprüfung durch die Registrierungsstelle (11, 12), ob eine Signatur des Zertifizierungsantrags korrekt ist;
d) Überprüfung durch die Registrierungsstelle (11, 12), ob ein öffentlicher Schlüssel des Zertifizierungsantrags mit einem in dem von einem Hersteller der Anlagenkomponente und/oder einem Betreiber der technischen Anlage ausgestellten Zertifikat und/oder einem operativen Zertifikat, das für die Anlagenkomponente in der technischen Anlage ausgestellt worden ist, enthaltenen öffentlichen Schlüssel übereinstimmt.

8. Verfahren nach Anspruch 7, bei dem durch die Registrierungsstelle (11, 12) geprüft wird, ob die Anlagenkomponente, die den Zertifizierungsantrag stellt, einem bestimmten Unternehmen zugeordnet werden kann.

9. Verfahren nach Anspruch 7 oder 8, bei dem durch die Registrierungsstelle (11, 12) geprüft wird, welchen Typ die Anlagenkomponente aufweist.

10. Verfahren nach einem der Ansprüche 7 bis 9, bei dem zusätzlich durch die Registrierungsstelle (11, 12) geprüft wird, ob ein Verwendungszweck des Zertifikatsantrags korrekt ist.

11. Verfahren zur Ausstellung eines Zertifikats durch eine Zertifizierungsstelle einer technischen Anlage, bei dem zunächst eine Beantragung des Zertifikats gemäß einem der Ansprüche 7 bis 10 erfolgt und anschließend, im Erfolgsfall, ein entsprechendes Zertifikat von der Zertifizierungsstelle (14) ausgestellt und sowohl an die entsprechende Anlagenkomponente als auch an eine Software-Datenbank (13) der technischen Anlage gemäß Anspruch 1 übertragen wird.
